# EUROPEAN PATENT APPLICATION

(11) **EP 4 636 861 A1**
(43) Date of publication of application: **22.10.2025**
(21) Application number: 25171085.1
(22) Date of filing: 16.04.2025
(51) Int. Cl.: H01M 4/36, H01M 4/38, H01M 4/583, H01M 4/60, H01M 4/62, H01M 10/054, H01M 10/056

(54) **RECHARGEABLE ZINC-QUINONE CELL**

(30) Priority: 16.04.2024 US 202418636698
(71) Applicant: E-Energize, LLC, Sheridan, WY 82801 (US)
(72) Inventor: ALKORDI, Mohamed H., Cairo (EG)
(74) Representative: Potter Clarkson

(57) **Abstract**

A quinone-carbon electrode is provided for primary and secondary batteries. A method of making such electrode is also disclosed. The electrode has one or more quinone in an amount from 5% to 90% by weight, and one or more conductive carbon materials in an amount from 95% to 10% by weight. For example, quinone molecules are immobilized by physical adsorption on the surface or within the pores of the conductive carbon material. This can be accomplished by contacting a solution of the quinone with the conductive carbon. In some embodiments, the quinone in the electrode delivers at least 60% of its theoretical two-electron specific discharge capacity and demonstrates at least 100 cycles of charge and discharge without significant loss of charge capacity.

## Description

### Field of the Disclosure

The present disclosure relates generally to rechargeable battery cells, and more particularly to a rechargeable zinc-quinone cell and a battery utilizing such a cell.

### Background

The vast majority of primary and secondary batteries currently utilize inorganic compounds, such as lithium manganese oxide (e.g., LiMn₂O₄) and lithium cobalt oxide (e.g., LiCoO₂), as the cathode material. However, many organic compounds have theoretically higher energy densities due to their light weight as well as the ability to undergo more than one electron redox process. However, most of the organic substances that have been investigated in detail so far as cathode material suffer from dissolution into the electrolyte, which causes leaching out from the cathode and thus these materials demonstrate limited battery rechargeability. Elaborate chemical modifications of such organic molecules, including quinones, have been attempted to chemically anchor such molecules to the current collector in the cathode or to generate insoluble form(s) of those molecules that do not dissolve in the electrolyte used. This step, however, adds a considerable price to the cost of the cathode material and thus is impractical for widescale commercialization.

A good example of organic substances that demonstrate good redox reversibility are those based on the quinone structure. Attempts have been made previously to use quinones as the cathode substance. Some of these methodologies required chemical modification in order to formulate insoluble quinones. Other methodologies described a method to chemically immobilize such quinones to the electrode or at the electrode. Yet other methodologies described a method to form insoluble quinone-metal complexes at the cathode.

Published PCT application WO2002075829A1 describes high energy density quinone electrodes for rechargeable batteries.

US patent 2,836,645A discloses a primary cell having a magnesium anode and a cathode comprising a quinone organic compound.

Published Japanese patent application JPH10294107A discloses a negative electrode active material for alkaline storage battery and a battery incorporating the same.

In a 2018 publication of Science Advances, Qing Zhao et al. disclose high-capacity aqueous zinc batteries using sustainable quinone electrodes Sci. Adv. 4, eaao 1761 (2018).

In a 2019 ACS publication of Applied Energy Materials, Liuchuan Tong et al. discuss a symmetric all-quinone aqueous battery. ACS App. Energy Mater. 2019, 2, 6 4016-4021 (31 May 2019).

Published PCT application WO2015048550A1 discloses a quinone flow battery.

To date, however, cathodes made from organic material have demonstrated energy densities that are too low to compete against transition metal oxide (TMO) batteries. Other quinone cathodes require chemical modification to inhibit dissolution of the quinone into the electrolyte or to chemically anchor quinone molecules to the current collector.

### Summary

Despite advances in battery cell technology, many challenges remain. It is therefore an object of the present invention to provide an electrode based on organic substances which demonstrate facile immobilization through physical adsorption on different types of carbon, including activated carbon, graphene, graphene oxide, graphene sponge, and carbon nanotubes, as examples of several forms of a conductive carbon host having a demonstrated cathode stability against leaching of the quinone to the electrolyte, and also having considerably high specific capacity and recyclability. Moreover, the invention includes the use of such an electrode in a rechargeable cell that also includes an aqueous electrolyte and utilizing zinc (Zn) metal for the anode, which is inexpensive and abundant.

It is to be understood that the described cathode can be used in aqueous or organic electrolytes in combination with suitable anode material like metal anodes or graphite anodes commonly used in metal or metal ion batteries including Zn, Ca, Mg, K, Na, and Li anodes. For example, one application for a quinone cathode according to the present invention is use in lithium or lithium ion cells, or Sodium (Na), Potassium (K), Calcium (Ca), or Magnesium (Mg) batteries that utilize organic electrolytes.

This object is achieved by the embodiments recited in the claims, in combination with the characterizing features.

Disclosed is a quinone electrode, in particular a quinone cathode, for primary and secondary batteries based on a specific electrode formulation. In one embodiment, the cathode comprises 10 wt% - 95 wt% carbon, as the conductive support, and 90 wt% - 5 wt% quinone molecules as the active cathode material. Quinone as referred herein includes any organic molecule having the quinone functionality. Optionally, the cathode can include an additive of conductive carbon in an amount 0-50 wt% of the combined quinone-carbon mass, where the additive conductive carbon serves to enhance the electronic conductivity of the electrode and/or serves as an ion reservoir in the cathode. Also disclosed is a battery with such an electrode.

In accordance with some embodiments, the electrode exhibits a substantially increased energy density and rechargeable cycles over conventional quinone electrodes as well as over inorganic cathode materials that are used in conventional Zinc batteries or other rechargeable batteries (e.g., Ni-Cd accumulators and Ni-MH accumulators). The electrode formulation comprises 5 wt%-90 wt% of at least one quinone, 95 wt%-10 wt% of at least one carbon material. In some examples, the quinone is present from 5 wt%-35 wt%, including 10-33 wt%, 10-25 wt%, 10-20 wt%, 15-25 wt%, 15-18 wt%, or about 16.6 wt%. In some embodiments, a given quantity of the quinone provides different performance when used with different carbon materials. As such, the quinone can be provided in a quantity that provides the desired performance for a given carbon material. Numerous variations and embodiments will be apparent in light of the present disclosure.

The quinone present in the electrode formulation according to the invention is not subject to any specific restriction. A quinone according to the present invention is to be understood as a molecular compound which has a quinoid structure or a structure derived therefrom. For example, the quinone can be unsubstituted or substituted or a derivative of a hydroquinone, a benzoquinone, an anthraquinone or a naphthoquinone, or a mixture of two or more thereof.

Substituents can be one or more of alkyl, aryl, halide, chalcogenide, hydroxide, oxide, sulfide, thiol, amine, and heterocycles of three, four, five, six, or seven member rings and that include one or more heteroatom other than carbon at any position on the parent quinone molecule.

Derivatives include, for example, amine, imine, oxime, cyanimine, and dicyanomethide compounds, such as 1,4-benzoquinone dioxime, 1,4-benzoquinone diimine, tetracyano-p-quinodimethane, N, N'-dicyanoquinone diimine, 2,3-Dichloro-5,6-dicyano-p-benzoquinone, and 1,4-diaminobenzene.

Also, oligomeric and polymeric compounds of the above-mentioned quinones can be used. For example, benzoquinones linked via alkyl chains having, for example, one to twenty carbon atoms, can be used in the electrode formulation according to the invention. In one embodiment, an unsubstituted or substituted, ortho- or para-benzoquinone is used as the quinone in the electrode formulation, according to the invention.

In addition, quinones substituted with straight-chain or branched-chain (C₁-C₆) alkyl, (C₃ -C₇) cycloalkyl, (C₁ -C₆) alkoxy, and (C₁-C₆) thioether, can be used. The substituents can also be one or more identical or different electron-withdrawing groups, selected from fluorine, chlorine, bromine, nitro, cyan, and sulfonate. Examples of such quinones include o-benzoquinone, and p-benzoquinone, tetrachloro-1,4-benzoquinone (chloranil), 2,3-Dichloro-5,6-dicyano-1,4-benzoquinone (DDQ), Tetramethyl-p-benzoquinone (duroquinone).

The present invention is characterized in the ability to immobilize quinone molecules onto the surface of conductive carbon like graphene, graphene oxide, carbon nanotubes, or within the pores of porous conductive support materials like activated carbon, through multiple physical interactions. This immobilization can be accomplished by dissolving the quinone in a solvent in which it has appreciable solubility and contacting this solution with the carbon, as a suspension, with continuous mixing or agitation to allow for homogeneous loading, until the desired loading of the quinone is achieved onto the surface or within the pores of the porous carbon. Optionally, the solid is then dried.

Examples of acceptable solvents include, but are not limited to, tetrahydrofuran, dioxane, chloroform, dichloromethane, halogenated hydrocarbons, alcohols (e.g., methanol or ethanol), dimethylformamide, and dimethylsulfoxide. Additionally, water might be used as the solvent if capable to dissolve the quinone. Preferably a solvent with low boiling point (e.g., below 100° C, below 90° C, or below 80° C) is used to reduce the cost associated with drying the electrode, and the use of an inexpensive solvent is preferrable to reduce the overall cost of processing and production of the cell.

In one embodiment, the mass loading of quinone molecules on the carbon form or into the porous carbon is in the range of 5-70 wt%. In a preferred embodiment, the mass loading of quinoid molecules is in the range of 10-50 wt%. In a more preferred embodiment, the mass loading of quinoid molecules is in the range of 15-35 wt%. Mass loading as referred to in the present disclosure is the weight percent of the quinone molecules in the total weight of the carbon loaded with the quinone molecules. It is to be understood that mass loading of quinone molecules can be optimized according to the type and porosity of the carbon used. For example, quinone loading can be optimized to balance the mass content of quinone molecules as the active electrode material, the accessibility by electrolyte to the immobilized quinone molecules, and the efficiency of electrochemical utilization of the quinone molecules loaded into the carbon used.

In accordance with some embodiments, the capacity of the electrode according to the invention exceeds that of the inorganic cathode materials available in the prior art. For example, some commercially available rechargeable batteries (e.g., Ni-Cd accumulators and Ni-MH accumulators) contain inorganic cathode materials having a battery capacity of up to approximately 130 Ah/kg with resting voltages of approximately 1.4 V. After 1000 cycles, the remaining battery capacity is approximately 80%.

In comparison, some electrode formulations according to the invention, for example utilizing hydroquinone as the active phase of the cathode and zinc as the anode, show a battery capacity in the range of 300~480 Ah/kg, which approaches the theoretical specific capacity of 486 Ah/kg for hydroquinone based on the weight of the quinone in the electrode formulation. Without being restricted to any particular theory, it is assumed that electrons are taken up not only by the quinone molecules, but also by the carbon material as capacitive current, which contributes minimally to the overall charge storage capacity of the cathode. In accordance with one embodiment, a cell constructed as disclosed herein demonstrated an open circuit voltage of ~ 1.1 V, charge / discharge cycles in the range from 0.2 to 1.8 V versus the zinc anode, with excellent cycling stability, where residual capacity after 1000 cycles approached 90 % or higher of the initial capacity of the cathode.

The anode can be a metal plate, a metal sheet, a metal foil, or a powder, in pure form or as an alloy of variable composition with other metal(s) or metalloids. In some embodiments, the metal is selected from zinc (Zn), iron (Fe), lead (Pb), aluminum (Al), magnesium (Mg), calcium (Ca), lithium (Li), or sodium (Na), without limiting the scope of the invention. In one embodiment, the zinc anode can be a zinc plate or sheet or foil or powder, without limiting the scope of the invention.

The zinc anode described herein is or includes the highly abundant, non-toxic, and eco-friendly zinc metal, in an electrolyte that is mostly aqueous and contains a source of Zn²⁺ ions and/or hydronium (H₃O⁺) ions. For example, the zinc anode comprises an aqueous solution of zinc sulfate (ZnSO₄) as an inexpensive and abundant salt. Without limitation to the invention, other water-stable metal electrodes or those that can be stabilized by specific electrolyte composition, like a "water-in-salt" electrolyte, can be used, including aluminum, zinc, magnesium, calcium, iron, sodium, lithium, alloys of these metals, and compositions containing other elements.

In other embodiments, reactive metal anodes, like magnesium (Mg), calcium (Ca), lithium (Li), and sodium (Na), can be used in combination with a compatible electrolyte. In another embodiment, lead (Pb) can be used as the anode in an aqueous electrolyte.

The electrolyte can be a strong or weak acid, a mineral acid, or an organic acid. The electrolyte can be used separately or in combination with a metal salt, such as ZnSO₄, in different ratios, or can be an acid or a metal salt like ZnSO₄ used alone as the electrolyte.

The electrolyte could also incorporate additives like ethylene glycol, glycerol, surfactants, or other salts that are added to extend the operating temperature range of the battery by reducing the freezing point of the electrolyte and/or raising the boiling point of the electrolyte. The electrolyte can also be a hydrogel, a cross linked polymer, an ion-exchange polymer, or can be doped with an acid or a salt.

The organic acid electrolyte used is preferably selected from acetic acid, trifluoroacetic acid, carbonic acid, pivalic acid, p-toluenesulfonic acid, formic acid, phthalic acid, maleic acid, itaconic acid, naphthalenedicarboxylic acid, and fumaric acid, or a mixture of two or more thereof.

The inorganic acid electrolyte used is preferably selected from sulfuric acid, nitric acid, hydrochloric acid, phosphoric acid, boric acid, tetrafluoroboric acid, perchloric acid, or a mixture of two or more thereof.

The salt electrolyte used is preferably selected from a sulfate, a chloride, a bromide, an iodide, a tetrafluoroborate, a perchlorate, a nitrate, a carbonate, an acetate, a trifluroacetate, a trichloroacetate, a formate, a succinate, a hexafluoro phosphate, a bis(trifluoromethane)sulfonimide of metal or ammonium or alkylammonium ions, or a mixture of two or more thereof.

The at least one carbon material present in the electrode formulation, provides as a conductive support of the quinone, is preferably selected from graphene, graphene sponge, graphene oxide, carbon nanotubes, or porous carbon. In some embodiments, the carbon material is a graphene or activated carbon having a specific surface area, measured according to Brunauer-Emmett-Teller analysis ("BET"), from 300 to 3,000 m²/g, preferably 400 to 2,000 m²/g, more preferably 500 to 1,700 m²/g, without limitation of the source of the carbon or the activation process used to make it.

The at least one carbon material present in the electrode formulation, provided as a conductive additive to enhance the electrical conductivity of the cathode, is preferably selected from graphite, acetylene black, carbon black, graphene, multi-wall carbon nanotubes (MWCNTs), or single-wall carbon nanotubes, or activated carbon, or a mixture of two or more thereof.

To produce an electrode according to the invention, for example, the quinone compound and the conductive carbon are first mixed in a solvent that allows dissolution of the quinone and loading on the surface or into the pores of the carbon, with the help of mechanical stirring or agitation to ensure adequate and uniform mixing, for a set period of time. This is followed by evaporating the solvent to produce the quinone-loaded carbon. Then, this solid is mixed with the conductive carbon component, followed by addition of the electrolyte in solid, liquid, or aqueous solution form. The relative composition of the electrolyte can vary. Then, the mixing continues until a homogeneous slurry is made that is then shaped, pressed, spread, sprayed, painted, or casted onto a current collector or filled into a shaped current collector form like a cylinder or coin cell or cup or any other structure, or molded or pressed, then inserted into a current collector. The present disclosure contemplates variations and alterations of this methodology. For example, the current collector is selected to be or include conductive polymers, metal foils, a metal mesh, a conductive carbon cloth, felt, or carbon paper, graphite, or metallic rod. Also, the cathode material can be prepared as a flexible film, pellets, discs, sheets, or rods, through casting, spraying, or pressing techniques. Additionally, the electrolyte can be added before shaping the electrode or the electrode is wetted with the electrolyte, or the electrolyte is added after shaping the cathode. Numerous variations and embodiments will be apparent in light of the present disclosure.

An anode according to the present disclosure can be used directly as a metal cylinder, sheet, foil, or powder, or can be coated with a layer of porous conductive carbon to enhance the anode utilization by providing metal deposition sites that can help preventing or precluding significant dendrite formation at the anode.

Optionally, a binder can be added to the mixture of the cathode solids to enhance its mechanical properties, facilitate electrode processing and shaping, enhance particles contact, and/or stabilize the cathode against leaching of quinone molecules, and/or enhance utilization of the metal ions present in the electrolyte. This binder can be selected from a wide range of organic polymers of variable molecular weight, including polyethers, polyvinyl alcohol (PVA), polyethylene glycol (PEG), polytetrafluoroethylene (PTFE), polyvinylidene fluoride (PVDF), polyvinylpyrrolidone (PVP), carboxymethyl cellulose (CMC), sulfonated tetrafluoroethylene (e.g., a sulfonated, tetrafluoroethylene-based fluoropolymer-copolymer sold as Nafion^{™}), and the likes.

Additionally, the binder can be added to the carbon layer coating the anode to enhance metal utilization by stabilizing the metal ions in the electrolyte, and/or enhance and facilitate metal deposition in the charging process.

Another aspect of the present invention relates to a secondary battery or quinone accumulator, which comprises the above-described electrode as cathode, a metal anode, and an electrolyte. The metal anodes or electrolytes which can be used in the context of such a secondary battery are known to a person skilled in the art and are not subject to any restrictions. In the secondary battery according to one embodiment, the metal anode is preferably based on a metal selected from zinc, cadmium, iron, aluminum, lead, magnesium, calcium, lithium or sodium. A zinc anode is particularly preferred.

In a particularly preferred embodiment, the anode is a zinc anode, and the electrolyte comprises a zinc sulfate solution. In one example, the electrolyte comprises an aqueous mixture of zinc sulfate and at least one acid. For example, the electrolyte is a mixture is prepared with 2M zinc sulfate and 2M sulfuric acid (H₂SO₄). In another example, the electrolyte is an acid solution without zinc salt. In another example, the electrolyte is an acetic acid solution. In another embodiment, the electrolyte is zinc salt solution without acid. By using such an electrolyte, resting voltages of about 1.1 V can be achieved, and the charging / discharging cycle is substantially symmetrical with comparable capacity.

In some embodiments, the electrolyte has a pH value from 0 to 7, including a pH from 1 to 5, or a pH from 1.5 to 4. The electrolyte pH can be adjusted by addition of a strong or weak acid, and the electrolyte ionic strength can be adjusted by inclusion of a zinc salt or other salt like sodium, lithium, potassium, or ammonium salt, for example. It is to be understood that an acidic electrolyte is preferred to prevent or slow down the formation of metal dendrite at the anode. It is also to be understood that the pH of the electrolyte can be adjusted to avoid hydrogen evolution at the anode as a side reaction, which can result in pressure buildup in the cell or rapid corrosion of the anode.

In one particular embodiment, the anode is a zinc anode coated with a layer of porous carbon to enhance the uniform deposition of zinc in the plating-stripping process during charge-discharge of the battery. The porous carbon added to the anode serves as a porous reservoir of the metal ions and can enhance the overall performance of the cell by allowing rapid kinetics for the stripping-plating process and thus can result in better utilization of the anode and/or high-rate capability of the cell. Furthermore, the porous carbon on the anode can mitigate dendrite formation by providing multiple sites for metal deposition during the plating cycle, and can reduce anode passivation and consequent overpotential due to increased impedance of the anode upon formation of thick solid-electrolyte interface, commonly encountered in metallic anodes exposed directly to the electrolyte. It is to be understood that a metal anode can be used without this coating layer of porous carbon, in accordance with some embodiments.

### Brief Description of the Drawings

FIG. 1 illustrates an example of the structure of the secondary cell, according to an embodiment of the present disclosure.
FIG. 2 is a plot of charge / discharge profiles for different current densities of a Zn-hydroquinone battery cell utilizing a cathode of hydroquinone loaded inside activated carbon, in accordance with an embodiment of the present disclosure.
FIG. 3 is a plot of discharge capacity vs. cycle number and illustrates the fast rate performance and durability of the Zn-hydroquinone battery over 1,000 cycles of charge-discharge at current density of 4 A/g cycled between 1.7V to 0.5V versus Zn/Zn²⁺ utilizing a cathode of hydroquinone loaded inside activated carbon, in accordance with an embodiment of the present disclosure.
FIG. 4 is a plot of open-circuit potential (OCP) recorded immediately after the battery is fully charged and shows retained charge capacity over 48 hours following the charging, in accordance with an embodiment of the present disclosure.

### Detailed Description

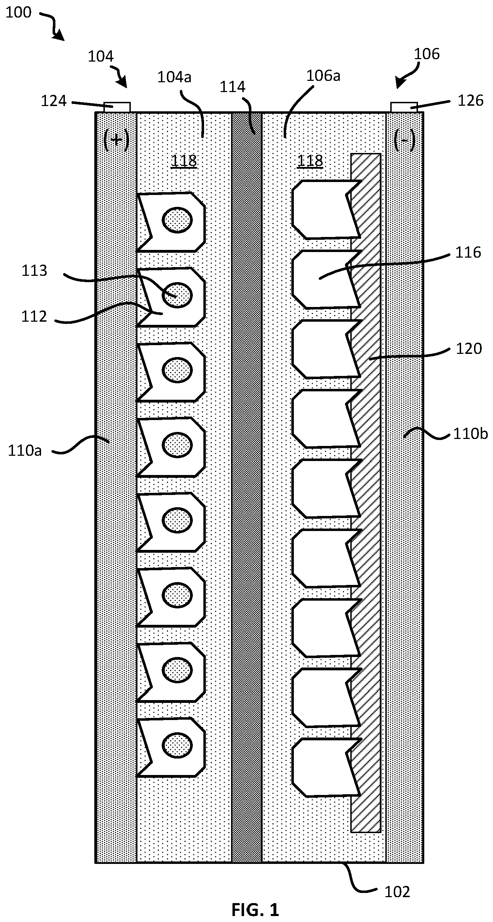

FIG. 1 illustrates a cross section of a secondary cell 100 with a cathode 104 and an anode 106, in accordance with an embodiment of the present disclosure. In contrast to a primary cell, which is designed to be discarded after being discharged, the secondary cell 100 is a rechargeable that can be charged and discharged many times. The secondary cell 100 has a housing 102 that defines a cathode compartment 104a and an anode compartment 106a separated by a separator 114. The housing 102 can be sealed or unsealed, depending on the intended use of the secondary cell 100. The cathode compartment includes the cathode 104, which has a first current collector 110a. A layer of conductive carbon 112 loaded with quinone molecules 113 is on the first current collector. The quinone molecules are immobilized on the surface and/or in pores of the conductive carbon 112. For example, the quinone molecules are adsorbed onto the surface of the conductive carbon 112. The cathode terminates with a cathode terminal 124 suitable for making an electrical connection.

The anode compartment 106a includes the anode 106, which has a second current collector 110b and a conductive metal anode material 120. In this example, a layer of porous carbon 116 is on the anode material 120, which is electrically coupled to the second current collector 110b. The layer of porous carbon 116 is not required in all embodiments. In one example, the metal anode material 120 is or comprises zinc and is placed in contact with the second current collector 110b, such as a conductive wire mesh or metal plate. In other embodiments, the anode material 120 can be omitted or it can be made as a single piece with the second current collector 110b. The anode 106 terminates at an anode terminal 126 suited for making an electrical connection.

The separator 114 is between the cathode 104 and the anode 106. The cathode compartment 104a and the anode compartment 106a each contain an electrolyte 118 on respective sides of the separator 114. The separator is configured to permit flow of ions between the cathode 104 and anode 106 during charge and discharge. Examples of acceptable separators 114 include, but are not limited to polymer porous membranes, woven or non-woven polymer separators, electrospun polymer membranes, glass frit, paper, and tissue, for example. Examples of suitable polymers include but are not limited to natural or synthetic or semisynthetic polymers, co-polymers, block polymers, graft polymers, polyethylene (PE), polypropylene (PP), polyethyleneterepthalate (PET), nylon, polyamides, polyesters, polysulfones, polyacrylonitriles, polyvinylidene difluoride (PVDF), polytetrafluoroethylene (PTFE), sulfonated poly(vinylidenedifluoride), tetrafluoroethylene-perfluoro-3,6-dioxa-4-methyl-7-octenesulfonic acid copolymer (e.g., a sulfonated tetrafluoroethylene based fluoropolymer-copolymer sold as Nafion^{™}), and the likes. Additionally, the separator 114 could be formulated as a hydrogel or cross-linked polymer, or aerogel or xerogel.

The electrolyte 118 can be an aqueous solution, such as zinc sulfate (ZnSO₄), sulfuric acid, acetic acid, or any other suitable electrolyte solution with a pH between 0 to 7. Additionally, solid state electrolytes can be used without limiting the scope of the present invention.

### Example 1: Rechargeable Cell with Zinc Sulfate Electrolyte

A cathode 104 was produced with 20 mg of hydroquinone and 100 mg of activated carbon. The hydroquinone was dissolved in 2 mL of tetrahydrofuran and added to the activated carbon. The mixture was stirred in an open vessel until the organic solvent evaporated. This formulation yielded hydroquinone-loaded activated carbon having a mass ratio of hydroquinone in the solid of approximately 16.6 wt%.

The cathode 104 was prepared by mixing 30 mg of the hydroquinone-loaded activated carbon and 10 mg of graphene, as conductive carbon additive to enhance electric conductivity of the cathode, in mass ratio of 3:1.

An aqueous electrolyte of 2M ZnSO₄ was used, where 100 microliters of this electrolyte was mixed with the cathode material to prepare a slurry. This slurry was deposited on a conductive current collector 110a to form the cathode 104.

A separator 114 is wetted with the electrolyte, where the separator 114 is made of an electrically insulating material and capable of permitting ion migration between the anode and cathode. In this example, the separator 114 is a nylon filtration membrane. Other separator materials can be used, as noted above.

A zinc metal foil is provided as the anode material 120. A layer of porous carbon 116 was prepared and cast onto the zinc anode material 120. The porous carbon 116 was saturated with the electrolyte 118 and was prepared by mixing 25 mg of activated carbon with 80 microliters of 2M ZnSO₄ to form a slurry. The resulting slurry was cast onto the face of the anode material 120 facing the separator 114. This layer of porous carbon 116 can enhance the overall performance of the battery cell 100 by providing more homogenous deposition sites for the zinc anode material 120, providing a reservoir of the electrolyte, and/or decreasing formation of dendrites at the anode. This layer of porous carbon 116 is beneficial to the battery cell 100; however, it is not required in all embodiments because a comparable battery can be made without this particular component.

A separator 114 of electrically non-conductive material was situated between the anode 104 and the cathode 106, allowing ion migration. In this example, the separator was a nylon filtration membrane. Examples of acceptable separators 114 include, but are not limited to polymer porous membranes, woven or non-woven polymer separators, electrospun polymer membranes, glass frit, paper, and tissue, for example. Examples of suitable polymers include but are not limited to natural or synthetic or semisynthetic polymers, co-polymers, block polymers, graft polymers, polyethylene (PE), polypropylene (PP), polyethyleneterepthalate (PET), polyamides, polyesters, polysulfones, polyacrylonitriles, polyvinylidene difluoride (PVDF), polytetrafluoroethylene (PTFE), sulfonated poly(vinylidenedifluoride), tetrafluoroethylene-perfluoro-3,6-dioxa-4-methyl-7-octenesulfonic acid copolymer (e.g., a sulfonated tetrafluoroethylene based fluoropolymer-copolymer sold as Nafion^{™}), and the likes. Additionally, the separator 114 could be formulated as a hydrogel or cross-linked polymer, or aerogel or xerogel. Additionally, solid state electrolytes can be used without limiting the scope of the present invention.

A secondary battery cell 100 was formed using the electrode formulation discussed above. The battery cell 100 includes the cathode 104, anode 106 with a zinc anode material 120, and an aqueous solution as the electrolyte 118 wetting the cathode 104 and anode 106. A separator 114 between the two electrodes 104, 106 was wet with a minimal amount of the electrolyte 118. In a test setup, the secondary battery cell 100 showed capacities of approximately 300~460 Ah/kg of quinone in the cathode 104, a voltage in a range from 0.2 to 1.8 V vs. the zinc anode 106, and a residual capacity of above 90% after 1,000 charging/discharging cycles. Note that the theoretical maximum capacity is 480 Ah/kg when the quinone accepts two electrons. Given that each quinone molecule can exchange 1 or 2 electrons, and since the exhibited capacity is above 240 Ah/kg (the theoretical maximum capacity when quinone exchanges one electron only), it can be concluded that at least some of the quinone molecules exchanged two electrons in this formulation.

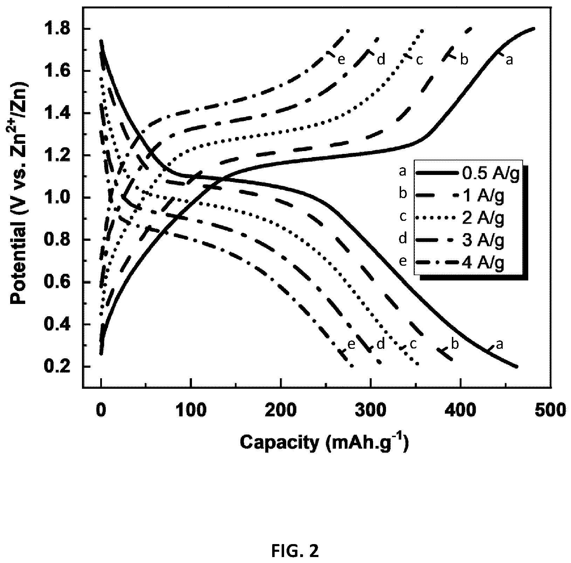

Referring now to FIG. 2, charge / discharge profiles a-e are plotted against capacity for different current densities of the Zn-hydroquinone battery utilizing a cathode of hydroquinone loaded inside activated carbon as discussed in Example 1. The current densities illustrated in FIG. 2 are (a) 0.5 A/g, (b) 1 A/g, (c) 2A/g, (d) 3A/g, and (e) 4A/g. In this plot, lines trending upward represent charge profiles and lines trending downward represent discharge profiles.

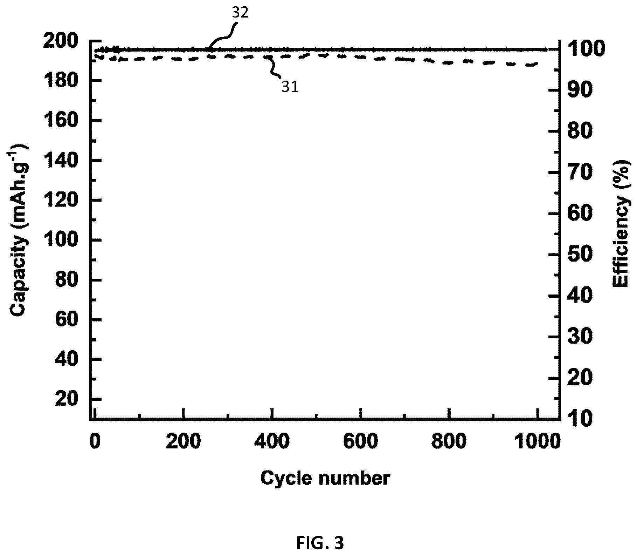

FIG. 3 is a plot of discharge capacity vs. cycle number for a Zn-hydroquinone battery utilizing a cathode of hydroquinone loaded inside activated carbon, as discussed in Example 1. FIG. 3 illustrates the fast rate performance and durability of the battery over 1,000 cycles of charge-discharge at current density of 4 A/g, where the battery cycled between 1.7V to 0.5V versus the Zn/Zn²⁺ anode. In this plot, the dashed line represents discharge capacity 31 as indicated along the left-side ordinate; the solid line represents a percentage of coulombic efficiency 32 as indicated along the right-side ordinate. As can be seen, the discharge capacity 31 starts at about 194 mAh/g and drops slightly to about 190 mAh/g after 1000 cycles; the coulombic efficiency 32 remains substantially at 100 % over all 1000 cycles.

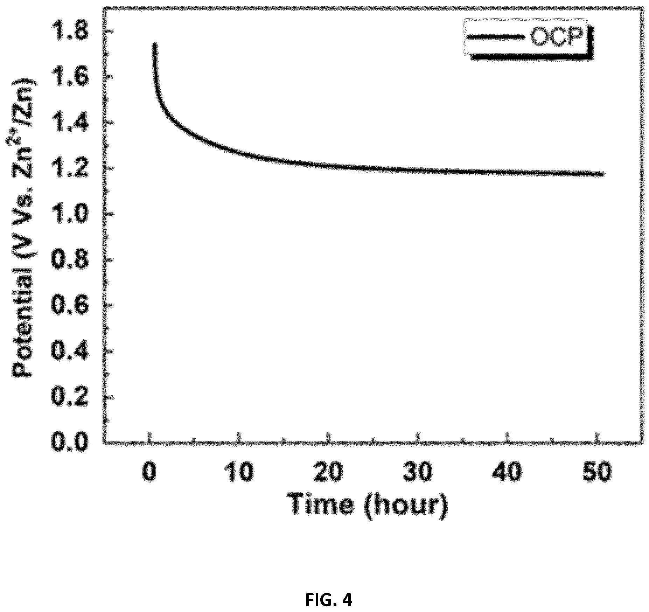

FIG. 4 is a plot of open-circuit potential (OCP) over time for the battery of Example 1. The open-circuit potential recorded immediately after the batter was fully charged (i.e., time = 0 hours), the open-circuit potential is about 1.75 V versus the Zn/Zn²⁺ anode. After 48 hours following the charging, the batter has retained an open-circuit potential of 1.2 V versus the Zn/Zn²⁺ anode, demonstrating minimal self-discharge of the battery and enhanced shelf-life.

### Example 2: Rechargeable Cell with Sulfuric Acid Electrolyte

A cathode material was prepared by mixing 30 mg of the hydroquinone-loaded activated carbon, described in Example 1, and 10 mg of graphene, as a conductive carbon additive to enhance electric conductivity of the cathode, in mass ratio of 3:1.

An aqueous electrolyte 118 of 2M H₂SO₄ was used, where 100 microliters of the electrolyte 118 was mixed with the cathode material to prepare a slurry. The cathode 104 was prepared with the cathode material noted above in combination with a first current collector 110a of conductive material. The cathode material slurry was deposited on the first current collector 110a.

An anode material 120 of zinc metal foil was provided for the anode 106. A layer of porous carbon 116 slurry saturated with the electrolyte 118 was prepared by mixing 25 mg of activated carbon with 80 microliters of 2M H₂SO₄. The resulting slurry was cast onto the face of the anode material 120 facing the separator 114. As noted above, this layer of porous carbon 116 can enhance the overall performance of the battery by providing more homogenous deposition sites for the zinc anode material 120, providing a reservoir of the electrolyte, and/or decreasing formation of dendrites at the anode. This layer of porous carbon 116 is beneficial to the battery cell 100; however, it is not required in all embodiments because a comparable battery can be made without this particular component.

A separator 114 of nylon filtration membrane was situated between the anode 104 and the cathode 106, allowing ion migration. The separator 114 was wet with the H₂SO₄ electrolyte 118. Other separator materials can be used, as noted above.

A secondary battery cell 100 was assembled using the electrode formulation discussed above. The battery cell 100 includes the cathode 104, anode 106 with a zinc anode material 120, and an aqueous H₂SO₄ solution as the electrolyte 118. The cathode 104 and anode 106 are wet with the electrolyte 118, and the nylon filtration membrane separator 114 between the two electrodes was wet with minimal amount of the H₂SO₄ electrolyte. In a test setup, the battery cell 100 showed capacities of approximately 300~460 Ah/kg of quinoid in the cathode, the voltage in a range from 0.2 to 1.8 V vs. the zinc anode, and a residual capacity of greater than 90% after 1,000 charging/discharging cycles.

### Example 3: Rechargeable Cell with Acetic Acid Electrolyte

A cathode material was prepared by mixing 30 mg of the hydroquinone-loaded activated carbon described in Example 1, and 10 mg of graphene, where the graphene is a conductive carbon additive provided to enhance electric conductivity of the cathode. The mass ratio of the hydroquinone-loaded activated carbon to graphene is 3:1.

An aqueous electrolyte 118 of 2M acetic acid (CH₃COOH) was used, where 100 microliters of this electrolyte 118 was mixed with the cathode material to prepare a slurry. The cathode 104 was prepared with the cathode material noted above in combination with a first current collector 110a of conductive material. The cathode material slurry was deposited on the first current collector 110a.

An anode material 120 of zinc metal foil was provided for the anode 106. A layer of porous carbon 116 slurry saturated with the electrolyte 118 was prepared by mixing 25 mg of activated carbon with 80 microliters of 2M acetic acid. The resulting slurry was cast onto the face of the anode material 120 facing the separator 114. As noted above, this layer of porous carbon 116 can enhance the overall performance of the battery by providing more homogenous deposition sites for the zinc anode material 120, providing a reservoir of the electrolyte, and/or decreasing formation of dendrites at the anode. This layer of porous carbon 116 is beneficial to the battery cell 100; however, it is not required in all embodiments because a comparable battery can be made without this particular component.

A separator 114 of nylon filtration membrane was situated between the anode 104 and the cathode 106, allowing ion migration. The separator 114 was wet with the acetic acid electrolyte 118. Other separator materials can be used, as noted above.

A secondary battery cell 100 was assembled using the electrode formulation discussed above. The battery cell 100 includes the cathode 104, anode 106 with a zinc anode material 120, and an aqueous acetic acid solution as the electrolyte 118. The cathode 104 and anode 106 are wet with the electrolyte 118, and the nylon filtration membrane separator 114 between the two electrodes was wet with minimal amount of acetic acid electrolyte 118. In a test setup, the battery cell 100 showed capacities of approximately 300~460 Ah/kg of quinone in the cathode, the voltage in a range from 0.2 to 1.8 V vs. the zinc anode, and a residual capacity of greater than 90% after 1,000 charging/discharging cycles.

### Example 4: Rechargeable Cell with Zinc Powder Anode

A cathode material was prepared by mixing 30 mg of the hydroquinone-loaded activated carbon described in Example 1, and 10 mg of graphene, where the graphene is a conductive carbon additive provided to enhance electric conductivity of the cathode. The mass ratio of the hydroquinone-loaded activated carbon to graphene is 3:1.

An aqueous electrolyte 118 of 2M ZnSO₄ was used, where 100 microliters of the electrolyte 118 was mixed with the cathode material to prepare a slurry. The cathode 104 was prepared with the cathode material noted above in combination with a first current collector 110a of conductive material. The cathode material slurry was deposited on the first current collector 110a.

Anode material 120 of zinc powder was provided for the anode 106. A layer of porous carbon 116 slurry was prepared by mixing 30 mg activated carbon and 10 mg of graphene powder wet with 100 microliters of the ZnSO₄ electrolyte 118. The resulting slurry was cast onto the second current collector 110b made with titanium (Ti) metal foil. Note that for this example, the activated carbon and graphene solids added to the Zn powder can be replaced with any other form of conductive carbon can be used without departure from the invention. As with examples discussed above, this layer of porous carbon 116 can enhance the overall performance of the battery cell 100 by providing more homogenous deposition sites for the zinc anode material 120, providing a reservoir of the electrolyte, and/or decreasing formation of dendrites at the anode. This layer of porous carbon 116 is beneficial to the battery cell 100; however, it is not required in all embodiments because a comparable battery can be made without this particular component.

A separator 114 of nylon filtration membrane was situated between the anode 104 and the cathode 106, allowing ion migration. The separator 114 was wet with the ZnSO₄ electrolyte 118 noted above. Other separator materials can be used, as noted above.

A secondary battery cell 100 was assembled using the electrode formulation discussed above. The battery cell 100 includes the cathode 104, anode 106 with a zinc anode material 120, and an aqueous ZnSO₄ solution as the electrolyte 118. The cathode 104 and anode 106 are wet with the electrolyte 118, and the nylon filtration membrane separator 114 between the two electrodes was wet with minimal amount of the ZnSO₄ electrolyte. In a test setup, the battery cell 100 showed capacities of approximately 300~460 Ah/kg of quinoid in the cathode, the voltage in a range from 0.2 to 1.8 V vs. the zinc anode, and a residual capacity of greater than 90% after 1,000 charging/discharging cycles.

### Example 5: Scale-up Test Cell

A cathode material was prepared by mixing 100 mg of the hydroquinone-loaded activated carbon described in Example 1, and 30 mg of graphene, where the graphene is a conductive carbon additive provided to enhance electric conductivity of the cathode. The mass ratio of the hydroquinone-loaded activated carbon to graphene is 3:1. In this example, 15 mg of activated carbon powder was added to the mixture as a porous reservoir of the electrolyte to extend the lifetime of the cell.

An aqueous electrolyte 118 of 2M acetic acid (CH₃COOH) was used, where 300 microliters of this electrolyte 118 was mixed with the cathode material to prepare a slurry. The cathode 104 was prepared with the cathode material noted above in combination with a first current collector 110a of stainless steel mesh and having dimensions of 2.5 cm x 2.5 cm. A slurry of the cathode material was deposited on the first current collector 110a.

An anode material 120 of zinc metal foil was provided for the anode 106. In this example, the anode material has dimensions of 2.5 cm x 2.5 cm. A layer of porous carbon 116 slurry saturated with the electrolyte 118 was prepared by mixing 100 mg of activated carbon with 200 microliters of 2M acetic acid. The resulting slurry was cast onto the face of the anode material 120 facing the separator 114. As noted above, this layer of porous carbon 116 can enhance the overall performance of the battery by providing more homogenous deposition sites for the zinc anode material 120, providing a reservoir of the electrolyte, and/or decreasing formation of dendrites at the anode. This layer of porous carbon 116 is beneficial to the battery cell 100; however, it is not required in all embodiments because a comparable battery can be made without this particular component.

A separator 114 of nylon filtration membrane was situated between the anode 104 and the cathode 106, allowing ion migration. The separator 114 was wet with the acetic acid electrolyte 118. Other separator materials can be used, as noted above.

A secondary battery cell 100 was assembled using the electrode formulation discussed above. The battery cell 100 includes the cathode 104, anode 106 with a zinc anode material 120, and an aqueous acetic acid solution as the electrolyte 118. The cathode 104 and anode 106 are wet with the electrolyte 118, and the nylon filtration membrane separator 114 between the two electrodes was wet with minimal amount of acetic acid electrolyte 118. In a test setup, the battery cell 100 showed capacities of approximately 300~460 Ah/kg of quinone in the cathode, the voltage in a range from 0.2 to 1.8 V vs. the zinc anode, and a residual capacity of greater than 90% after 1,000 charging/discharging cycles.

### Example 6: Higher Loading of Hydroquinone

A cathode material was prepared by mixing 500 mg of activated carbon of high surface area (~1,400 m²/g) and a solution containing 130 mg of hydroquinone in 8 ml of tetrahydrofuran (THF). Mixing was maintained with the aid of a magnetic stirrer at room temperature until the solvent evaporated. The resulting in a dried solid contains 20.6 wt% hydroquinone. A cathode was then prepared by mixing 30 mg of the hydroquinone-loaded activated carbon described above, and 10 mg of graphene, where the graphene is provided as a conductive carbon additive to enhance electric conductivity of the cathode. The mass ratio of the hydroquinone-loaded activated carbon to graphene is 3:1.

An aqueous electrolyte 118 of 2M ZnSO₄ was used, where 80 microliters of this electrolyte 118 was mixed with the cathode material to prepare a slurry. The cathode 104 was prepared with the cathode material noted above in combination with a first current collector 110a of conductive material. The cathode material slurry was deposited on the first current collector 110a.

An anode material 120 of zinc metal foil was provided for the anode 106. A layer of porous carbon 116 slurry saturated with the electrolyte 118 was prepared by mixing 25 mg of activated carbon with 80 microliters of 2M ZnSO₄. The resulting slurry was cast onto the face of the anode material 120 facing the separator 114. As noted above, this layer of porous carbon 116 can enhance the overall performance of the battery by providing more homogenous deposition sites for the zinc anode material 120, providing a reservoir of the electrolyte, and/or decreasing formation of dendrites at the anode. This layer of porous carbon 116 is beneficial to the battery cell 100; however, it is not required in all embodiments because a comparable battery can be made without this particular component.

A separator 114 of nylon filtration membrane was situated between the anode 104 and the cathode 106, allowing ion migration. The separator 114 was wet with the ZnSO₄ electrolyte 118. Other separator materials can be used, as noted above.

A secondary battery cell 100 was assembled using the electrode formulation discussed above. The battery cell 100 includes the cathode 104, anode 106 with a zinc anode material 120, and the ZnSO₄ solution as the electrolyte 118. The cathode 104 and anode 106 are wet with the electrolyte 118, and the nylon filtration membrane separator 114 between the two electrodes was wet with minimal amount of ZnSO₄ electrolyte 118. In a test setup, the battery cell 100 showed capacities of approximately 300~460 Ah/kg of quinoid in the cathode, the voltage in a range from 0.2 to 1.8 V vs. the zinc anode, and a residual capacity of greater than 90% after 1,000 charging/discharging cycles.

### Example 7: Higher Loading of Hydroquinone

A cathode material was prepared by mixing 200 mg of activated carbon of high surface area (~1,700 m²/g) and a solution containing 100 mg of hydroquinone in 4 ml of tetrahydrofuran (THF). Mixing was maintained with the aid of a magnetic stirrer at room temperature until the solvent evaporated. The resulting dried solid contained 33.3 wt% hydroquinone. A cathode was then prepared by mixing 30 mg of the hydroquinone-loaded activated carbon described above, and 10 mg of graphene, where the graphene is provided as a conductive carbon additive to enhance electric conductivity of the cathode. The mass ratio of the hydroquinone-loaded activated carbon to graphene is 3:1.

An aqueous electrolyte 118 of 2M ZnSO₄ was used, where 80 microliters of this electrolyte 118 was mixed with the cathode material to prepare a slurry. The cathode 104 was prepared with the cathode material noted above in combination with a first current collector 110a of conductive material. The cathode material slurry was deposited on the first current collector 110a.

An anode material 120 of zinc metal foil was provided for the anode 106. A layer of porous carbon 116 slurry saturated with the electrolyte 118 was prepared by mixing 25 mg of activated carbon with 80 microliters of 2M ZnSO₄. The resulting slurry was cast onto the face of the anode material 120 facing the separator 114. As noted above, this layer of porous carbon 116 can enhance the overall performance of the battery by providing more homogenous deposition sites for the zinc anode material 120, providing a reservoir of the electrolyte, and/or decreasing formation of dendrites at the anode. This layer of porous carbon 116 is beneficial to the battery cell 100; however, it is not required in all embodiments because a comparable battery can be made without this particular component.

A separator 114 of nylon filtration membrane was situated between the anode 104 and the cathode 106, allowing ion migration. The separator 114 was wet with the ZnSO₄ electrolyte 118. Other separator materials can be used, as noted above.

A secondary battery cell 100 was assembled using the electrode formulation discussed above. The battery cell 100 includes the cathode 104, anode 106 with a zinc anode material 120, and the ZnSO₄ solution as the electrolyte 118. The cathode 104 and anode 106 are wet with the electrolyte 118, and the nylon filtration membrane separator 114 between the two electrodes was wet with minimal amount of ZnSO₄ electrolyte 118. In a test setup, the battery cell 100 showed capacities of approximately 300~460 Ah/kg of quinoid in the cathode, the voltage in a range from 0.2 to 1.8 V vs. the zinc anode, and a residual capacity of greater than 90% after 1,000 charging/discharging cycles.

### Example 8: Hydroquinone-Graphene Cathode

A cathode material was produced by mixing 200 mg of graphene powder and a solution of 40 mg hydroquinone in 4 mL of tetrahydrofuran. The mixture was then sonicated briefly in an ultrasound bath, and the mixing was maintained at room temperature with the aid of magnetic stirrer until the solvent evaporated. The resulting dried solid prepared contains 16.6 wt% hydroquinone. A cathode was then prepared by mixing 30 mg of the hydroquinone-loaded graphene described above, and 10 mg of activated carbon, where the conductive carbon additive is provided to enhance electric conductivity of the cathode and provides a reservoir for the electrolyte. The mass ratio of the hydroquinone-loaded graphene to activated carbon is 3:1.

An aqueous electrolyte of 2M ZnSO4 was used, where 80 micro liters of this electrolyte was mixed with the cathode material to prepare a slurry. The cathode 104 was prepared with the cathode material noted above in combination with a first current collector 110a of conductive material. The cathode material slurry was deposited on the first current collector 110a.

An anode material 120 of zinc metal foil was provided for the anode 106. A layer of porous carbon 116 slurry saturated with the ZnSO₄ electrolyte 118 was prepared by mixing 25 mg of activated carbon with 80 microliters of 2M ZnSO₄. The resulting slurry was cast onto the face of the anode material 120 facing the separator 114. As noted above, this layer of porous carbon 116 can enhance the overall performance of the battery by providing more homogenous deposition sites for the zinc anode material 120, providing a reservoir of the electrolyte, and/or decreasing formation of dendrites at the anode. This layer of porous carbon 116 is beneficial to the battery cell 100; however, it is not required in all embodiments because a comparable battery can be made without this particular component.

A separator 114 of nylon filtration membrane was situated between the anode 104 and the cathode 106, allowing ion migration. The separator 114 was wet with the ZnSO₄ electrolyte 118. Other separator materials can be used, as noted above.

A secondary battery cell 100 was assembled using the electrode formulation discussed above. The battery cell 100 includes the cathode 104, anode 106 with a zinc anode material 120, and an aqueous ZnSO₄ solution as the electrolyte 118. The cathode 104 and anode 106 are wet with the electrolyte 118, and the nylon filtration membrane separator 114 between the two electrodes was wet with minimal amount of the electrolyte 118. In a test setup, the battery cell 100 showed capacities of approximately 300~460 Ah/kg of quinoid in the cathode, the voltage in a range from 0.2 to 1.8 V vs. the zinc anode, and a residual capacity of greater than 90% after 1,000 charging/discharging cycles. In some instances, the battery cell 100 showed a capacity of 498 Ah/kg of quinoid in the cathode.

### Example 9: Hydroquinone-Graphene Cathode and Higher Quinone Loading

A cathode material was prepared by mixing 200 mg of graphene powder and a solution containing 60 mg of hydroquinone in 4 milliliters of tetrahydrofuran. The mixture was then sonicated briefly in an ultrasound bath, and the mixing was maintained at room temperature with the aid of magnetic stirrer until the solvent evaporated. The resulting dried solid contains 23 wt% hydroquinone. A cathode was then prepared by mixing 30 mg of the hydroquinone-loaded graphene described above, and 10 mg of activated carbon, where the activated carbon is provided as a conductive carbon additive to enhance electric conductivity of the cathode and to provide a reservoir for the electrolyte. The mass ratio of the hydroquinone-loaded graphene to activated carbon is 3:1.

An aqueous electrolyte 118 of 2M ZnSO₄ was used, where 80 microliters of this electrolyte 118 was mixed with the cathode material to prepare a slurry. The cathode 104 was prepared with the cathode material noted above in combination with a first current collector 110a of conductive material. The cathode material slurry was deposited on the first current collector 110a.

An anode material 120 of zinc metal foil was provided for the anode 106. A layer of porous carbon 116 slurry saturated with the electrolyte 118 was prepared by mixing 25 mg of activated carbon with 80 microliters of 2M ZnSO₄. The resulting slurry was cast onto the face of the anode material 120 facing the separator 114. As noted above, this layer of porous carbon 116 can enhance the overall performance of the battery by providing more homogenous deposition sites for the zinc anode material 120, providing a reservoir of the electrolyte, and/or decreasing formation of dendrites at the anode. This layer of porous carbon 116 is beneficial to the battery cell 100; however, it is not required in all embodiments because a comparable battery can be made without this particular component.

A separator 114 of nylon filtration membrane was situated between the anode 104 and the cathode 106, allowing ion migration. The separator 114 was wet with the ZnSO₄ electrolyte 118. As noted above, other separator materials can be used.

A secondary battery cell 100 was assembled using the electrode formulation discussed above. The battery cell 100 includes the cathode 104, anode 106 with a zinc anode material 120, and an aqueous acetic acid solution as the electrolyte 118. The cathode 104 and anode 106 are wet with the electrolyte 118, and the nylon filtration membrane separator 114 between the two electrodes was wet with minimal amount of acetic acid electrolyte 118. In a test setup, the battery cell 100 showed capacities of approximately 300~460 Ah/kg of quinoid in the cathode, or about 400 Ah/kg. The voltage was in a range from 0.2 to 1.8 V vs. the zinc anode and a residual capacity of greater than 90% after 1,000 charging/discharging cycles was observed.

### Example 10: Hydroquinone-MWCNTs

A cathode according to the invention was prepared by mixing 60 mg of hydroquinone and 200 mg of multi walled carbon nanotubes (MWCNTs). The hydroquinone was dissolved in 4 ml of tetrahydrofuran and the MWCNTs were added. The mixture was briefly sonicated in an ultrasound bath then stirred in open vessel until the organic solvent evaporated. This formulation yielded hydroquinone-loaded MWCNTs where the mass ratio of hydroquinone in the solid is approximately 23 wt%.

A cathode material was prepared by mixing 30 mg of the hydroquinone-loaded MWCNTs in 240 microliters of 2M ZnSO₄ to prepare a slurry. An additive of polyvinyl difluoride (PVDF) as a binder was mixed with the cathode slurry. This addition involved separately dissolving the PVDF in in N-methyl pyrrolidone (NMP), where 100 micro liters of this solution was added to the slurry, equivalent to 5 mg of the PVDF. The resulting slurry was spread over titanium foil as the first current collector 110a.

An anode material 120 of zinc metal foil was provided for the anode 106. A layer of porous carbon 116 slurry saturated with the electrolyte 118 was prepared by mixing 22 mg of activated carbon with 100 microliters of 2M ZnSO₄. The resulting slurry was cast onto the face of the anode material 120 facing the separator 114. As noted above, this layer of porous carbon 116 can enhance the overall performance of the battery by providing more homogenous deposition sites for the zinc anode material 120, providing a reservoir of the electrolyte, and/or decreasing formation of dendrites at the anode. This layer of porous carbon 116 is beneficial to the battery cell 100; however, it is not required in all embodiments because a comparable battery can be made without this particular component.

An electrically insulating separator 114 of nylon filtration membrane was situated between the anode 104 and the cathode 106, allowing ion migration. The separator 114 was wet with the ZnSO₄ electrolyte 118. As noted above, other separator materials can be used.

A secondary battery cell 100 was assembled using the electrode formulation discussed above. The battery cell 100 includes the cathode 104, anode 106 with a zinc anode material 120, and an aqueous ZnSO₄ solution as the electrolyte 118. The cathode 104 and anode 106 are wet with the electrolyte 118, and the nylon filtration membrane separator 114 between the two electrodes was wet with minimal amount of acetic acid electrolyte 118. In a test setup, the battery cell 100 showed capacities of approximately 300~460 Ah/kg of quinoid in the cathode, the voltage in a range from 0.2 to 2.0 V vs. the zinc anode, and a residual capacity of greater than 90% after 1,000 charging/discharging cycles.

### Further Example Embodiments

The following examples pertain to further embodiments, from which numerous permutations and configurations will be apparent.

Example 11 is an electrode for a primary or secondary battery, the electrode comprising a conductive carbon with quinone molecules immobilized on a surface and/or within the pores of the conductive carbon, where the quinone molecules are present in an amount from 5-90% by weight.

Example 12 includes the electrode of Example 11, where the quinone molecules are present from 5-45% by weight.

Example 13 includes the electrode of Example 11, where the quinone molecules are present form 10-35% by weight.

Example 14 includes the electrode of any one of Examples 11-13, where a majority portion of the quinone molecules is selected from unsubstituted or substituted hydroquinones, benzoquinones, anthraquinones, naphthoquinones, derivatives thereof, and mixtures thereof.

Example 15 includes the electrode of Example 14, where the majority portion of quinoid molecules is selected from an unsubstituted or substituted orthoquinone or an unsubstituted or substituted paraquinone.

Example 16 includes the electrode of any one of Examples 11-13, where a majority portion of the quinoid molecules are selected from substituted quinones having one or more substituents selected from straight or branched (C1-C6) alkyl chains, (C3-C7) cycloalkyl rings, (C1-C6) alkoxy chains, (C1-C6) thioether residues, fluorine, chlorine, bromine, iodo groups, amine, alkylamine, nitro groups, hydroxyl groups, methoxy groups, cyano groups, and sulfonate groups.

Example 17 includes the electrode of any one of Examples 11 to 16, where the conductive carbon comprises carbon selected from graphene, carbon nanotubes, and activated carbon having a specific surface area measured according to BET method in a range of 300 to 3000 m2/g.

Example 18 includes the electrode of any one of Examples 11 to 17, and further comprises at least one additional conductive carbon selected from the group consisting of graphite, carbon black, acetylene black, single walled carbon nanotubes, multi-walled carbon nanotubes, graphene, graphyne, graphene oxide, activated carbon, and combinations thereof, in an amount of up to 50% by weight of the quinoid-conductive carbon mass.

Example 19 includes the electrode of any one of Examples 1-8, and further comprises a current collector, where the conductive carbon is on the current collector.

Example 20 is a secondary battery comprising one or more cells containing an electrolyte in the one or more cells, where the electrolyte is selected from an aqueous solution of an inorganic acid, an organic acid, and a salt solution of cationic metals ions and counterions. An electrode according to any one of Examples 11-19 is in the one or more cells, where the electrode is configured as a cathode. A metal anode is provided in the one or more cells and a separator is situated between the anode and the cathode and configured to permit ion exchange.

Example 21 includes the secondary battery of Example 20, where the electrolyte is the inorganic acid selected from sulfuric, nitric, phosphoric, hydrochloric, perchloric acid, and tetrafluoroboric acid.

Example 22 includes the secondary battery of Example 19, where the electrolyte is the organic acid selected from formic acid, acetic acid, trifluoro acetic acid, p-toluenesulfonic acid, pivalic acid, succinic acid, maleic acid, benzoic acid.

Example 23 includes the secondary battery of Example 19, where the electrolyte is the salt solution comprising a cationic metal ion selected from a sulfate, a nitrate, a perchlorate, a chloride, a bromide, a fluoride, an acetate, a formate, a trifluoroacetate, a p-toluenesulfonate, a hexafluorophosphate, a tetrafluoroborate, a bis(trifluoromethanesulfonyl)imide, and mixtures of two or more thereof.

Example 24 includes the secondary battery of any one of Examples 20-23, where the metal anode comprises a metal selected from zinc, magnesium, cadmium, iron, aluminum, lead, sodium, lithium, and alloys of any two or more metals thereof.

Example 25 includes the secondary battery of Example 24, where the metal anode comprises zinc and the electrolyte comprises zinc sulfate.

Example 26 includes the secondary battery of any one of Examples 24 or 25, where the metal anode has a form of a sheet, a disk, a foil, a can, a pin, a cub, or a powder.

Example 27 includes the secondary battery of any one of Examples 20-26, and further comprises a current collector in electrical contact with the metal anode.

Example 28 includes the secondary battery of Example 27, where the metal anode is configured as a current collector. In other examples, the metal anode is on a current collector.

Example 29 includes the secondary battery of any one of Examples 27 or 28, where the current collector is selected from graphite, a conductive polymer, a metal foil, carbon felt, carbon fiber, carbon cloth, and carbon paper.

Example 30 includes the secondary battery of any one of Examples 20-29, where the metal anode further comprises a layer of porous carbon on a surface of the metal anode facing the separator.

Example 31 is a rechargeable cell comprising a housing, an electrolyte in the housing, where the electrolyte has a pH between 0 and 7 and contains zinc and hydronium ions. A separator is in the housing and divides the housing between a cathode compartment and an anode compartment, where the separator configured to allow ion transfer between the electrolyte in the anode compartment and the electrolyte in the cathode compartment. A cathode is in the cathode compartment, the cathode having a current collector, conductive carbon on the current collector, and quinone molecules immobilized on a surface and/or within the pores of the conductive carbon. An anode of conductive metal is in the anode compartment.

Example 32 includes the rechargeable cell of Example 31, where the conductive metal comprises one or more of zinc, cadmium, iron, lead, aluminum, magnesium, calcium, lithium, and sodium.

Example 33 includes the rechargeable cell of any one of Examples 31-32, where the conductive metal includes a form selected from a plate, a foil, and a powder.

Example 34 includes the rechargeable cell of any one of Examples 31-33 and further comprises a layer of porous carbon on the anode.

Example 35 includes the rechargeable cell of any one of Examples 31-34, where the electrolyte comprises an organic acid or an inorganic acid.

Example 36 includes the rechargeable cell of Example 35, where the electrolyte comprises sulfuric acid.

Example 37 includes the rechargeable cell of Example 35, where the electrolyte comprises acetic acid.

Example 38 includes the rechargeable cell of any one of Examples 31-37, where the electrolyte has a pH from 1.5 to 4.

Example 39 includes the rechargeable cell of any one of Examples 31-38, where the electrolyte is an aqueous solution comprising one or more salt of zinc, sodium, lithium, potassium, and ammonium.

Example 40 includes the rechargeable cell of Example 39, where the electrolyte comprises zinc sulfate.

Example 41 includes the rechargeable cell of any one of Examples 31-40, where a mass loading of the quinone molecules on the conductive carbon is from 5 wt% to 70 wt%.

Example 42 includes the rechargeable cell of any one of Examples 31-40, where a mass loading of the quinone molecules on the conductive carbon is from 10 wt% to 50 wt%.

Example 43 includes the rechargeable cell of any one of Examples 31-40, where a mass loading of the quinone molecules on the conductive carbon is from 15 wt% to 30 wt%.

Example 44 includes the rechargeable cell of any one of Examples 31-43, wherein the conductive carbon has a specific surface area from 400 to 3000 m2/g.

Example 45 includes the rechargeable cell of Example 44, where the conductive carbon has a specific surface area from 500 to 2,000 m2/g.

Example 46 includes the rechargeable cell of any one of Examples 31-45, where the conductive carbon is selected from graphene, graphene oxide, graphene sponge, carbon nanotubes, porous carbon, and activated carbon.

Example 47 includes the rechargeable cell of any one of Examples 31-46, where the quinone comprises one or more of a hydroquinone, a benzoquinone, an anthraquinone, and a naphthoquinone.

Example 48 includes the rechargeable cell of Example 47, where the quinone comprises a derivative form of the hydroquinone, the benzoquinone, the anthraquinone, and the naphthoquinone.

Example 49 includes the rechargeable cell of Example 47, where the quinone comprises one or more unsubstituted or substituted hydroquinones, benzoquinones, anthraquinones, naphthoquinones, derivatives thereof, and mixtures thereof.

Example 50 includes the rechargeable cell of Example 49, where the quinone is selected from substituted quinones having one or more substituents selected from straight or branched (C1-C6) alkyl chains, (C3-C7) cycloalkyl rings, (C1-C6) alkoxy chains, (C1-C6) thioether residues, fluorine, chlorine, bromine, iodo groups, amine, alkylamine, nitro groups, hydroxyl groups, methoxy groups, cyano groups, and sulfonate groups.

The foregoing description of example embodiments has been presented for the purposes of illustration and description. It is not intended to be exhaustive or to limit the present disclosure to the precise forms disclosed. Many modifications and variations are possible in light of this disclosure. It is intended that the scope of the present disclosure be limited not by this detailed description, but rather by the claims appended hereto. Future-filed applications claiming priority to this application may claim the disclosed subject matter in a different manner and generally may include any set of one or more limitations as variously disclosed or otherwise demonstrated herein.

## Claims

1. An electrode for a primary or secondary battery, the electrode comprising a conductive carbon with quinoid molecules immobilized on a surface and/or within the pores of the conductive carbon, wherein the quinoid molecules are present in an amount from 5-90% by weight.

2. The electrode of claim 1, wherein the quinoid molecules are present from 5-35% by weight.

3. The electrode of claim 1, wherein a majority of the quinoid molecules are selected from unsubstituted or substituted hydroquinones, benzoquinones, anthraquinones, naphthoquinones, derivatives thereof, and mixtures thereof.

4. The electrode according to claim 1, wherein the majority portion of quinoid molecules are selected from an unsubstituted or substituted orthoquinone or an unsubstituted or substituted paraquinone.

5. The electrode according to claim 1, wherein a majority portion of the quinoid molecules are selected from substituted quinones having one or more substituents selected from straight or branched (C1-C6) alkyl chains, (C3-C7) cycloalkyl rings, (C1-C6) alkoxy chains, (C1-C6) thioether residues, fluorine, chlorine, bromine, iodo groups, amine, alkylamine, nitro groups, hydroxyl groups, methoxy groups, cyano groups, and sulfonate groups.

6. The electrode according to claim 1, wherein the conductive carbon comprises carbon selected from graphene, carbon nanotubes, a graphene sponge, graphene oxide, and activated carbon, wherein the activated carbon has a specific surface area measured according to BET method in a range of 300 to 3000 m²/g.

7. The electrode according to claim 6, further comprising at least one additional conductive carbon selected from the group consisting of graphite, carbon black, acetylene black, single walled carbon nanotubes, multi-walled carbon nanotubes, graphene, graphyne, graphene oxide, activated carbon, carbon cloth, graphite paper, and combinations thereof, in an amount of up to 50% by weight of the quinone-conductive carbon mass.

8. The electrode according to claim 1, further comprising a current collector, wherein the conductive carbon is on the current collector.

9. A battery comprising:
one or more cells containing an electrolyte in the one or more cells, the electrolyte selected from an aqueous solution of an inorganic acid, an organic acid, and a salt solution of cationic metals ions and counterions;
the electrode of claim 1, wherein the electrode is configured as a cathode;
a metal anode; and
a separator situated between the anode and the cathode and configured to permit ion exchange.

10. The battery according to claim 9, wherein the electrolyte comprises one or more of inorganic acid, an organic acid, and a metal salt solution.

11. The battery according to claim 9, wherein the metal anode comprises zinc and the electrolyte comprises zinc sulfate.

12. The battery according to claim 9, wherein the metal anode has a form of a sheet, a disk, a foil, a can, a pin, a cub, or a powder.

13. The battery according to claim 9, wherein the metal anode is configured as a current collector.

14. The battery according to claim 9, wherein the metal anode further comprises a layer of porous carbon on a surface of the metal anode facing the separator.

15. The battery of any of claims 9-14, wherein the electrolyte has a pH from 1.5 to 7 and comprises zinc sulfate, preferably a pH from 1.5 to 4.
